# EUROPEAN PATENT APPLICATION

(11) **EP 4 803 787 A1**
(43) Date of publication of application: **09.09.2026**
(21) Application number: 23957627.5
(22) Date of filing: 01.11.2023
(51) Int. Cl.: F16K 3/24, F16F 9/34

(54) **VALVE DEVICE AND SHOCK ABSORBER PROVIDED WITH THIS VALVE DEVICE**

(71) Applicant: Astemo, Ltd., Tokyo 100-0004 (JP)
(72) Inventor: MURAKAMI, Yosuke, Hitachinaka-shi, Ibaraki 312-8503 (JP)
(74) Representative: Nordmeyer, Philipp Werner
(86) International application number: PCT/JP2023/039366
(87) International publication number: WO 2025/094299

(57) **Abstract**

A valve device (30) includes a tubular passage forming member (40) and a tubular spool valve (60) slidable relative to the passage forming member (40). The passage forming member (40) has a communication port (56) that provides communication between inside and outside of the passage forming member (40) in a radial direction. The spool valve (60) has a cutout portion (62, 63) cut out in one end surface (61) in an axial direction (Rs). The spool valve 60 can adjust a degree of communication of the cutout portion (62, 63) with the communication port (56) by relative displacement with respect to the passage forming member (40).

## Description

### TECHNICAL FIELD

The present invention relates to a valve device and a shock absorber provided with this valve device.

### BACKGROUND ART

Certain valve devices perform opening degree adjustment by electronic control. Such a valve device is assembled in a shock absorber mounted on a straddle-type vehicle such as a two-wheeled vehicle and a three-wheeled vehicle, so that a damping force of the shock absorber can be automatically adjusted during traveling of the straddle-type vehicle. As a result, real-time damping adjustment according to a traveling situation of the straddle-type vehicle can be automatically controlled by the valve device. Such a valve device and a shock absorber are known from, for example, Patent Literature 1.

A valve device known in Patent Literature 1 includes a housing having a hollow portion thin and elongated in an axial direction, a tubular spool valve fitted to the hollow portion to be slidable in the axial direction, and a solenoid that drives the spool valve in the axial direction. The housing has a port that provides communication between inside and outside of the hollow portion in a radial direction. The spool valve has an elongated hole that is elongated in an axial direction of the spool valve. The elongated hole runs in a radial direction of the spool valve and has both ends in a longitudinal direction (axial direction) closed. The elongated hole is formed with, at one end thereof in the longitudinal direction, a small-width portion having a small groove width. The spool valve is driven by the solenoid to adjust a degree of communication between the port and the elongated hole. The valve device is assembled in a shock absorber.

### PRIOR ART DOCUMENT

### PATENT LITERATURE

Patent Literature 1: JP6023446B

### SUMMARY OF INVENTION

### OBJECT TO BE ACHIEVED BY THE INVENTION

In the valve device known in Patent Literature 1, the elongated hole of the spool valve has a complicated shape in which a groove shape of one end portion is different from that of the other part to adjust the degree of communication with the port. To make variable characteristics of the valve device appropriate, it is necessary to improve processing accuracy of a shape of the elongated hole, in particular, the small-width portion. Further, both ends of the elongated hole are closed. To process an elongated hole having such a complicated shape, generally, a hole is first formed from an outer side of the spool valve in the radial direction by a cutting tool such as a drill, and the cutting tool is moved therefrom to process the hole into a prescribed shape. For this reason, a degree of difficulty in processing the elongated hole is high.

An object of the present invention is to provide a technique that can improve variable characteristics of a valve device and improve processability of a spool valve.

### MEANS FOR ACHIEVING THE OBJECT

As a result of intensive studies, the present inventors have focused on a fact that it is not necessary to limit to an elongated hole with both ends closed to ensure the variable characteristics of the valve device. It has been found that, if there is an opening running in a radial direction of the spool valve, a degree of communication of the opening with a communication port can be adjusted. The present invention has been completed based on this finding.

According to the present disclosure, there is provided a valve device including:
a passage forming member that is formed of a tubular member and has a communication port that provides communication between inside and outside of the passage forming member in a radial direction; and
a spool valve that is formed of a tubular member slidable directly or indirectly relative to the passage forming member, has at least one cutout portion cut out in one end surface in an axial direction, and is configured to adjust a degree of communication of the cutout portion relative to the communication port by relative displacement with respect to the passage forming member.

### EFFECTS OF INVENTION

In the present disclosure, it is possible to improve variable characteristics of a valve device and improve processability of a spool valve.

### BRIEF DESCRIPTION OF DRAWINGS

[Fig. 1] Fig. 1 is a cross-sectional side view of a main portion of a shock absorber provided with a valve device according to Embodiment 1.
[Fig. 2] Fig. 2 is an enlarged view of a vicinity of the valve device shown in Fig. 1.
[Fig. 3] Fig. 3 is an exploded view of the valve device shown in Fig. 2.
[Fig. 4] Fig. 4A is a perspective view of a spool valve shown in Fig. 3, and Fig. 4B is an unfolded view of an outer peripheral surface of the spool valve shown in Fig. 4A.
[Fig. 5] Fig. 5A is a first modification of a cutout portion shown in Fig. 4A, Fig. 5B is a second modification of the cutout portion shown in Fig. 4A, and Fig. 5C is a third modification of the cutout portion shown in Fig. 4A.
[Fig. 6] Fig. 6 is an operation view of the valve device shown in Fig. 2.
[Fig. 7] Fig. 7A schematically shows a communication state of the cutout portion with an annular groove and a communication port shown in Fig. 6, and Fig. 7B is an unfolded view showing the communication state of the cutout portion with the annular groove and the communication port shown in Fig. 7A.
[Fig. 8] Fig. 8 is a cross-sectional view of a shock absorber and a valve device according to Embodiment 2.
[Fig. 9] Fig. 9 is an exploded view of a spool valve and a collar shown in Fig. 8.

### EMBODIMENTS FOR CARRYING OUT THE INVENTION

Embodiments of the present invention will be described below with reference to the accompanying drawings. The embodiments shown in the accompanying drawings are examples of the present invention, and the present invention is not limited to the embodiments. In the description, upper and lower sides refer to upper and lower sides based on a state in which a shock absorber is mounted on a straddle-type vehicle. Up in the drawings indicates the upper side and Dn in the drawings indicates the lower side.

### <Embodiment 1>

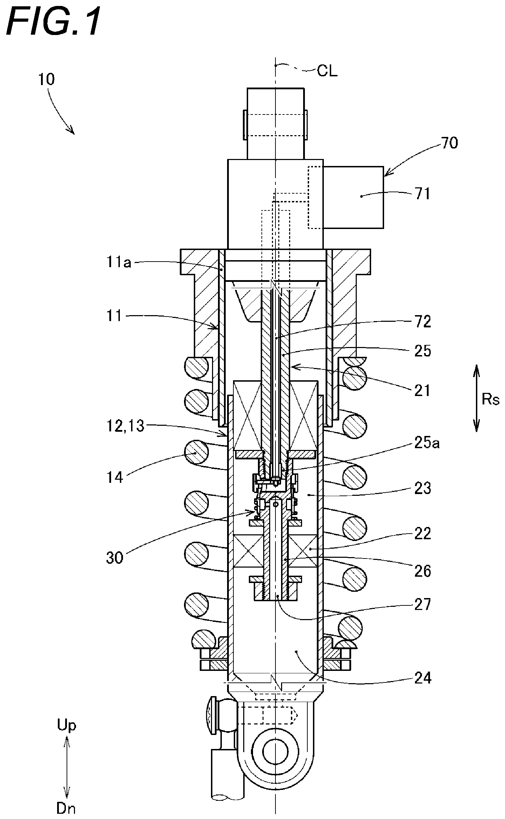

A valve device 30 and a shock absorber 10 provided with the valve device 30 according to Embodiment 1 will be described with reference to Figs. 1 to 7.

As shown in Fig. 1, the shock absorber 10 is used for a motorcycle that is a straddle-type vehicle (not shown) on which a rider straddles. In the following description, the motorcycle may be referred to as "straddle-type vehicle".

The shock absorber 10 is used, for example, as a rear cushion of the straddle-type vehicle. However, the shock absorber 10 is not limited to the rear cushion, and may be used for a front fork.

The shock absorber 10 includes a cylindrical vehicle body side tube 11 (first tube 11) coupled to a vehicle body side bracket (not shown) and a cylindrical axle side tube 12 (second tube 12) coupled to an axle side bracket (not shown). The axle side tube 12 is fitted to be movable relative to the vehicle body side tube 11. The axle side tube 12 also serves as a cylinder 13. The cylinder 13 may be constituted by a member separate from the axle side tube 12. In this case, the cylinder 13 may extend from a lower end of the axle side tube 12 to inside of the axle side tube 12. Inside of the cylindrical cylinder 13 is filled with liquid (hydraulic oil). The vehicle body side tube 11 and the axle side tube 12 are biased in directions away from each other by a compression coil spring 14.

In Embodiment 1, the shock absorber 10 is described as having an inverted configuration in which the axle side tube 12 is advanced and retracted relative to the vehicle body side tube 11. However, the shock absorber 10 has an upright configuration in which the vehicle body side tube 11 is advanced and retracted relative to the axle side tube 12.

The shock absorber 10 further includes a piston rod 21 extending from an upper end portion 11a of the vehicle body side tube 11 to the inside of the cylinder 13. The piston rod 21 is provided with a piston 22 at a lower end portion thereof. The piston 22 partitions the inside of the cylinder 13 into two liquid chambers 23, 24 (upper first liquid chamber 23 and lower second liquid chamber 24). The vehicle body side tube 11, the axle side tube 12 (cylinder 13), the piston rod 21, and the piston 22 are all located on a center line CL of the piston rod 21.

The piston rod 21 includes a first piston rod 25 extending from the upper end portion 11a of the vehicle body side tube 11 into the first liquid chamber 23, and a second piston rod 26 extending from a lower end portion 25a of the first piston rod 25 into the second liquid chamber 24. The first piston rod 25 is a tubular member, a so-called hollow rod. The second piston rod 26 is further referred to as a rod end since it is provided at an end portion of the piston rod 21. The first piston rod 25 and the second piston rod 26 are strength members constituting the shock absorber 10, and are thus made of a relatively high-strength material, for example, steel. The piston 22 is provided on the second piston rod 26 of the piston rod 21.

The valve device 30 is assembled in the shock absorber 10. The valve device 30 is provided in a communication passage 27 that provides communication between the first liquid chamber 23 and the second liquid chamber 24, and for example, in the second piston rod 26. By assembling the valve device 30 into the shock absorber 10, a damping force of the shock absorber 10 during traveling of the straddle-type vehicle can be automatically adjusted. As a result, real-time damping adjustment according to a traveling situation of the straddle-type vehicle can be automatically controlled by the valve device 30.

Hereinafter, the valve device 30 will be described in detail.

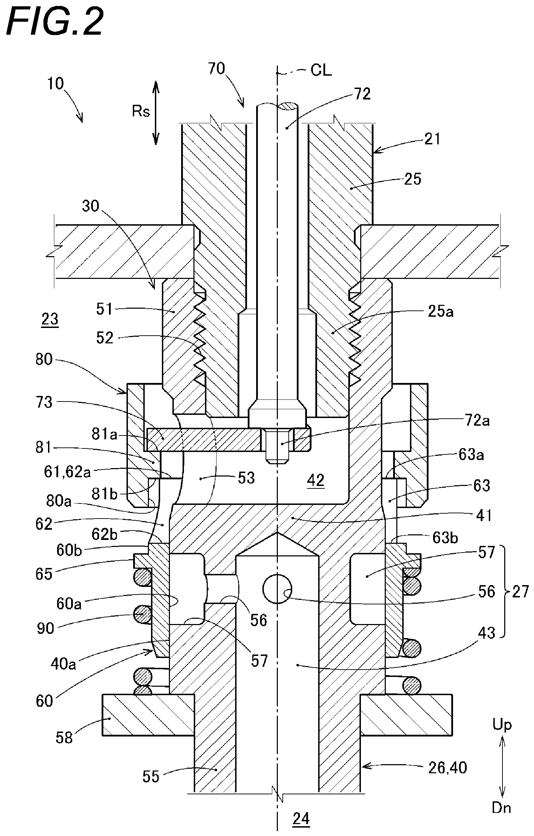

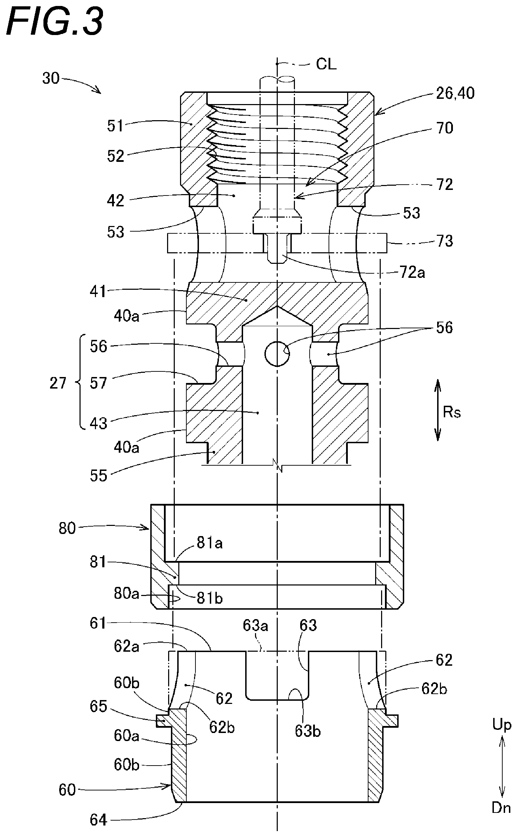

As shown in Figs. 2 and 3, the valve device 30 includes a tubular passage forming member 40, a tubular spool valve 60 that is slidable relative to the passage forming member 40, and a drive mechanism 70 (see also Fig. 1) that drives the spool valve 60.

The passage forming member 40 and the spool valve 60 each having a tubular shape are located on the center line CL of the piston rod 21. The center line CL of the piston rod 21 may be appropriately referred to as "center line CL (axis CL) of the passage forming member 40" or "center line CL (axis CL) of the spool valve 60". Here, an axial direction Rs of the passage forming member 40 is a direction along the center line CL of the passage forming member 40 and is the same as the axial direction Rs of the spool valve 60 (direction along the center line CL of the spool valve 60).

The passage forming member 40 (valve body 40) also serves as the second piston rod 26 (rod end 26). Accordingly, the valve device 30 can be easily assembled into the piston rod 21, and thus a configuration of the valve device 30 can be simplified, the valve device 30 can have a small size and a reduced number of components. The passage forming member 40 may be a member separate from the piston rod 21.

Inside of the tubular passage forming member 40 is partitioned into two chambers 42, 43 (upper first chamber 42 and lower second chamber 43) by a partition plate 41 formed in the middle in a longitudinal direction (axial direction Rs). The first chamber 42 communicates with inside of the first piston rod 25. The second chamber 43 communicates with the second liquid chamber 24.

In the passage forming member 40, a first end portion 51 on a first chamber 42 side has a female thread 52 that can be screwed to the lower end portion 25a of the first piston rod 25, and a through hole 53 that penetrates inside and outside of the first end portion 51 in a radial direction in a position of the first chamber 42. The through hole 53 communicates with the first chamber 42.

In the passage forming member 40, a second end portion 55 on a second chamber 43 side has at least one communication port 56 penetrating inside and outside of the second end portion 55 in the radial direction in a vicinity of the partition plate 41. The communication port 56 is constituted by, for example, a circular through hole, and provides communication between the second chamber 43 with outside of the passage forming member 40. The passage forming member 40 further has, in an outer peripheral surface 40a thereof, a groove 57 (annular groove 57) that is annular and formed over an entire circumference in a position of the communication port 56. The communication passage 27 that provides communication between the first liquid chamber 23 and the second liquid chamber 24 (see Fig. 1) is a flow path constituted by the second chamber 43, the communication port 56, and the annular groove 57.

The annular groove 57 can provide communication between the communication port 56 and cutout portions 62, 63 (described later) of the spool valve 60 even when the spool valve 60 rotates in a circumferential direction of the passage forming member 40, and can be omitted when the spool valve 60 does not rotate in the circumferential direction relative to the passage forming member 40.

As shown in Figs. 2, 3, and 4A, the spool valve 60 (valve body 60) is slidably (particularly, slidably in the axial direction Rs) fitted to the outer peripheral surface 40a of the passage forming member 40. A gap between the outer peripheral surface 40a of the passage forming member 40 and an inner peripheral surface 60a of the spool valve 60 is preferably set to minimum within a range in which the spool valve 60 is relatively slidable.

The spool valve 60 has at least one (preferably, a plurality of) cutout portion 62 and at least one cutout portion 63 cut out in one end surface 61 (first end surface 61) in the axial direction Rs, for example, the end surface 61 on a first piston rod 25 side. That is, opening ends 62a, 63a of the cutout portions 62, 63 coincide with the first end surface 61 of the spool valve 60, and bottoms 62b, 63b of the cutout portions 62, 63 face an other end surface 64 (second end surface 64) side of the spool valve 60 in the axial direction Rs. The cutout portions 62, 63 penetrate inside and outside of the tubular spool valve 60 in the radial direction.

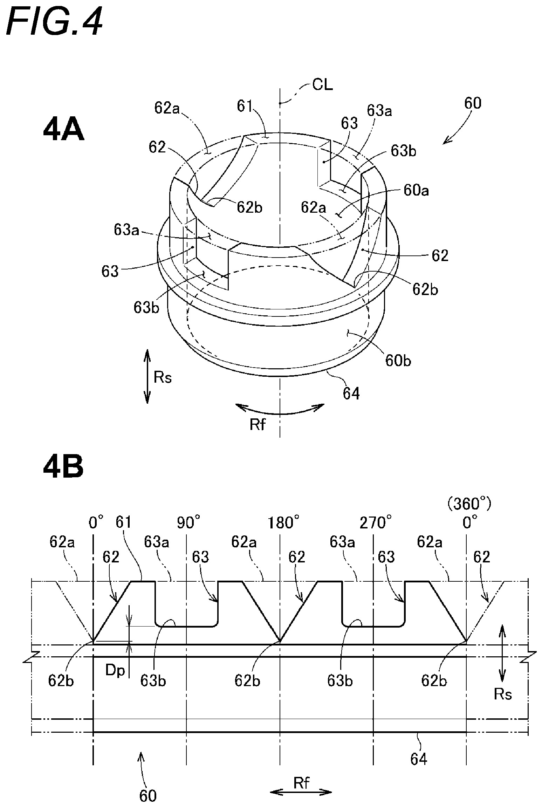

As shown in Figs. 4A and 4B, the plurality of cutout portions 62, 63 preferably include at least one (for example, a plurality of) first cutout portion 62 having a first shape and at least one (for example, a plurality of) second cutout portion 63 having a second shape different from the first shape.

When the spool valve 60 is viewed from an outer peripheral surface 60b side, the first shape of the first cutout portion 62 is, for example, a V shape tapered toward the second end surface 64 with the first end surface 61 of the spool valve 60 as the opening end 62a. A tip end 62b (bottom 62b) of the V shape faces the second end surface 64. The second shape of the second cutout portion 63 is, for example, a rectangular shape in which the first end surface 61 of the spool valve 60 is the opening end 63a and a flat bottom-shaped bottom 63b faces the second end surface 64. For example, the bottom 62b of the V-shaped first cutout portion 62 is set deeper than the bottom 63b of the rectangular second cutout portion 63 by a depth Dp toward the second end surface 64.

The first cutout portion 62 and the second cutout portion 63 are preferably arranged alternately at equal pitches in a circumferential direction Rf of the spool valve 60. More preferably, the first cutout portion 62 and the second cutout portion 63 each have a pair. The pair of first cutout portions 62, 62 are arranged in axial symmetry (line symmetry) relative to the center line CL of the spool valve 60. The pair of second cutout portions 63, 63 are arranged in axial symmetry (line symmetry) relative to the center line CL of the spool valve 60. For example, as shown in Fig. 4B, with reference to the center line CL of the spool valve 60, the first cutout portion 62 is located in azimuth 0° and 180°, and the second cutout portion 63 is located in azimuth 90° and 270°.

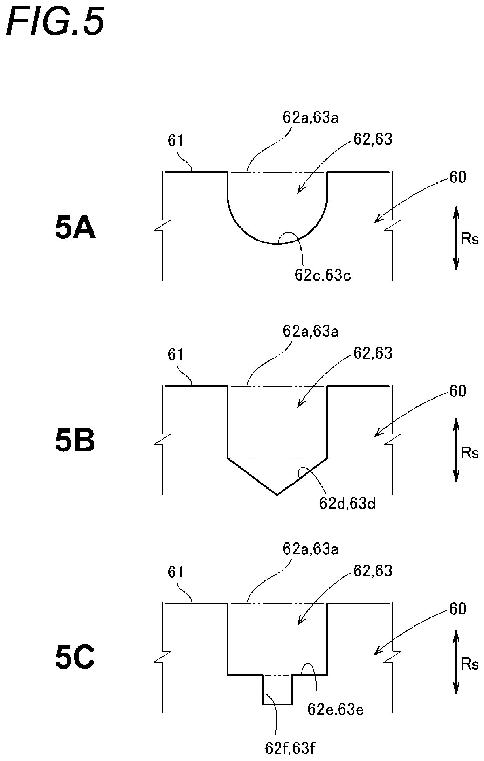

Shapes of the cutout portions 62, 63 are freely selected, and may be, for example, an arc shape having semicircular bottoms 62c, 63c shown in Fig. 5A, a rectangular shape having tapered surfaces 62d, 63d shown in Fig. 5B, and a shape having auxiliary cutout portions 62f, 63f having a small width further cut out from flat bottoms 62e, 63e shown in Fig. 5C toward the second end surface 64.

As shown in Figs. 1 and 2, the drive mechanism 70 includes a drive unit 71, a rod 72 driven by the drive unit 71 and movable in the axial direction of the spool valve 60, an arm 73 extending radially outward of the rod 72 from the rod 72, and a pressing member 80 pressed by the arm 73 and movable in the axial direction of the spool valve 60.

The drive unit 71 is a drive source such as a solenoid or a step motor, and is driven by a control signal of a control unit (not shown). The rod 72 is disposed in the first piston rod 25 to be movable in the axial direction Rs of the spool valve 60. The rod 72 is located on the center line CL of the spool valve 60, that is, inside the tubular passage forming member 40. The arm 73 is fitted to one end portion 72a (lower end portion 72a) of the rod 72 and extends radially outward relative to the passage forming member 40. The arm 73 is formed of, for example, a bar or a plate-shaped member.

The pressing member 80 is an annular member that can press the first end surface 61 of the spool valve 60 in the axial direction Rs. The pressing member 80 covers the first end surface 61 of the spool valve 60 in the axial direction Rs and the opening ends 62a, 63a of the cutout portions 62, 63, and can thus be referred to as a lid member. More specifically, as shown in Figs. 2 and 3, the pressing member 80 has an inner peripheral surface 80a that can be fitted to the outer peripheral surface 60b of the spool valve 60, and an annular flange 81 having a smaller diameter than the inner peripheral surface 80a. The flange 81 has an upper first flange surface 81a that can be pressed by the arm 73, and a lower second flange surface 81b that can press the first end surface 61 of the spool valve 60. The first and second flange surfaces 81a, 81b are flat surfaces parallel to each other and orthogonal to the center line CL of the spool valve 60. The drive unit 71 can move the spool valve 60 in the axial direction Rs via the arm 73 and the pressing member 80.

The drive mechanism 70 further includes a biasing member 90 that biases the spool valve 60 toward the pressing member 80. The biasing member 90 is implemented by, for example, a compression coil spring. The biasing member 90 may be referred to as "compression coil spring 90" as appropriate. The compression coil spring 90 is interposed between a spring receiving portion 58 provided on the passage forming member 40 and a spring receiving portion 65 provided on the outer peripheral surface 60b of the spool valve 60, so that the spool valve 60 biases the communication port 56 of the passage forming member 40 in a closing direction (upper side Up in the axial direction Rs). As a result, the compression coil spring 90 holds the communication port 56 in a fully closed state (see Fig. 2) by the spool valve 60, and holds the first end surface 61 of the spool valve 60 in a state of being pressed against the pressing member 80. The inner peripheral surface 60a of the spool valve 60 closes the communication port 56 and the annular groove 57.

Next, operation of the valve device 30 having the above configuration will be described.

As shown in Fig. 2, in a state in which the drive unit 71 (see Fig. 1) does not push the rod 72 toward the passage forming member 40, the compression coil spring 90 holds the communication port 56 and the annular groove 57 in a fully closed state by the spool valve 60. In the fully closed state, the first end surface 61 of the spool valve 60 is pressed against the pressing member 80.

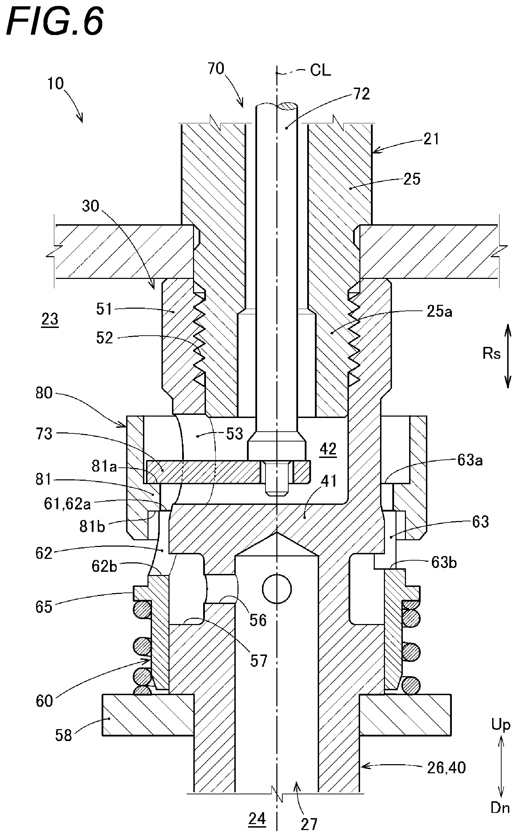

Thereafter, as shown in Fig. 6, the drive unit 71 (see Fig. 1) pushes the rod 72 toward the passage forming member 40 against a biasing force of the compression coil spring 90, whereby the arm 73 presses the first flange surface 81a of the pressing member 80 toward the spool valve 60 by a pushing stroke amount (movement amount). Therefore, the pressing member 80 presses the first end surface 61 of the spool valve 60 toward the compression coil spring 90 by the second flange surface 81b. The spool valve 60 is displaced to the lower side Dn in the axial direction Rs against the biasing force of the compression coil spring 90 to open the annular groove 57 corresponding to the displacement amount. As a result, a degree of communication of the cutout portions 62, 63 with the communication port 56 can be adjusted.

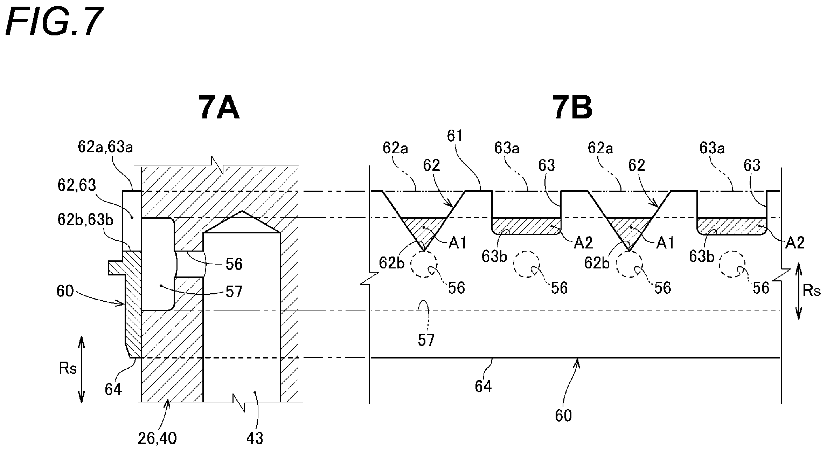

The degree of communication of the cutout portions 62, 63 with the communication port 56 will be described in more detail. Fig. 7A schematically shows a communication state of the cutout portions 62, 63 with the annular groove 57 and the communication port 56 shown in Fig. 6. Fig. 7B shows the communication state of the cutout portions 62, 63 with the annular groove 57 and the communication port 56 shown in Fig. 7A in an unfolded manner.

When the spool valve 60 is opened to a freely selected position, an opening area of the V-shaped first cutout portion 62 relative to the annular groove 57 is A1, and an opening area of the rectangular second cutout portion 63 relative to the annular groove 57 is A2. Since the first cutout portion 62 and the second cutout portion 63 each have a pair, a sum A10 (not shown) of the opening areas can be obtained by an expression A10 = 2 × (A1 + A2). In this way, the sum A10 of the opening areas changes according to a displacement amount (stroke) of the spool valve 60 in the axial direction Rs. Variable characteristics of the opening areas relative to a stroke can be freely set by appropriately setting shapes of the bottoms 62b, 63b of the cutout portions 62, 63. Therefore, by combining the shapes, sizes, arrangements, and numbers of the cutout portions 62, 63, the degree of communication of the cutout portions 62, 63 with the communication port 56 can be appropriately set to be optimal according to application of the valve device 30.

Although the present invention is applied to the shock absorber 10, damping force characteristics of the shock absorber 10 can be easily controlled by making the damping force characteristics as constant as possible relative to the stroke of the spool valve 60. In this case, the shapes of the bottoms 62b, 63b of the respective cutout portions 62, 63 of the spool valve 60 of the valve device 30 are combined by shifting shapes such as an arc shape and a triangular shape, and changes in the opening areas are added to achieve the above purpose.

A "hole" having an arc shape, a triangular shape, a quadrangular shape, and the like is fairly difficult to process. In addition, from a viewpoint of setting, it is difficult to form a different variation in hole processing, but processing of a freely selected shape can be easily implemented by performing cutout processing (groove processing) from open ends 62a, 63a side.

As is clear from the above description, the spool valve 60 can adjust the degree of communication of the cutout portions 62, 63 with the communication port 56 by relative displacement in the axial direction Rs relative to the passage forming member 40.

### <Embodiment 2>

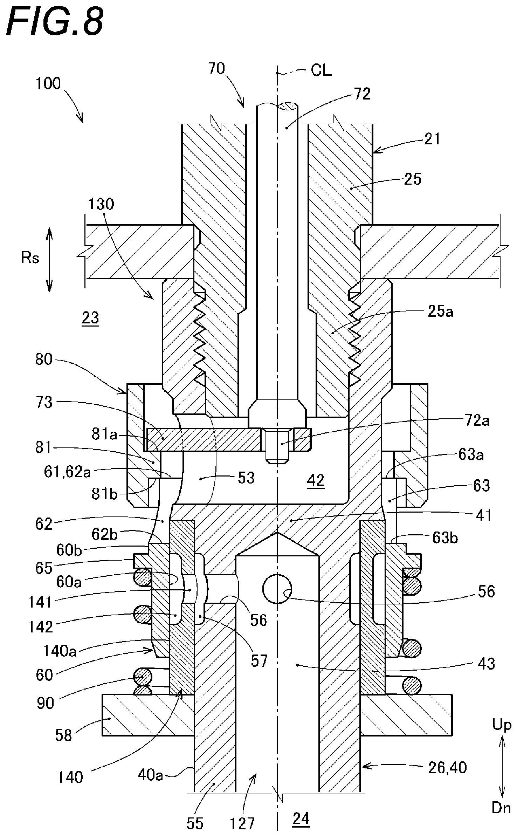

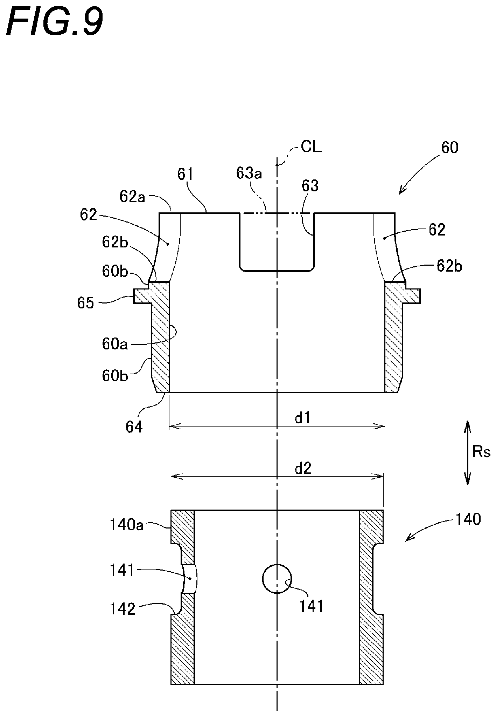

A valve device 130 and a shock absorber 100 provided with the valve device 130 according to Embodiment 2 will be described with reference to Figs. 8 and 9.

Fig. 8 is a cross-sectional view showing the shock absorber 100 and the valve device 130 and corresponds to Fig. 2. Fig. 9 is an exploded view of main components of the valve device 130 and corresponds to Fig. 3. The valve device 130 according to Embodiment 2 is characterized in that a collar 140 shown in Figs. 8 and 9 is added to the valve device 30 according to Embodiment 1 shown in Figs. 1 to 7. Other basic configurations are common to the valve device 30 and the shock absorber 10 provided with the valve device 30 according to Embodiment 1. Components common to the valve device 30 and the shock absorber 10 according to Embodiment 1 are denoted by the same reference numerals, and detailed description thereof is omitted.

Specifically, in the valve device 130 according to Embodiment 2, the tubular collar 140 is interposed between the outer peripheral surface 40a of the passage forming member 40 and the inner peripheral surface 60a of the spool valve 60. The collar 140 is fitted to the outer peripheral surface 40a of the passage forming member 40 while being restricted from relatively moving in the axial direction Rs. The spool valve 60 is indirectly slidable relative to the passage forming member 40 by being slidably fitted to an outer peripheral surface 140a of the collar 140. To prevent liquid leakage from a fitting part between the passage forming member 40 and the collar 140 as much as possible, it is preferable to improve a sealing property between the passage forming member 40 and the collar 140 (for example, to improve fitting accuracy).

The collar 140 has at least one communication port 141 penetrating inside and outside of the collar 140 in the radial direction. The collar 140 further has, in the outer peripheral surface 140a thereof, a groove 142 (annular groove 142) that is annular and formed over an entire circumference in a position of the communication port 141. In Embodiment 2, a communication passage 127 that provides communication between the first liquid chamber 23 and the second liquid chamber 24 (see Fig. 1) is a flow path constituted by the second chamber 43, the communication port 56, the annular groove 57, and the communication port 141 and the annular groove 142 of the collar 140.

The annular grooves 57, 142 can provide communication between the communication port 56 and the cutout portions 62, 63 even when the spool valve 60 rotates in the circumferential direction of the passage forming member 40, and can be omitted when the spool valve 60 does not rotate in the circumferential direction relative to the passage forming member 40.

The collar 140 has a larger linear expansion coefficient than a linear expansion coefficient of the passage forming member 40 and the spool valve 60. For example, the passage forming member 40 and the spool valve 60 are made of steel, and the collar 140 is made of aluminum (including an aluminum alloy). Since the spool valve 60 slides on the outer peripheral surface 140a of the collar 140 made of aluminum, the outer peripheral surface 140a is preferably coated with a coating (for example, an anodic oxide coating) having excellent wear resistance to increase wear resistance.

When environmental temperature at which the shock absorber 100 is used increases, the passage forming member 40, the spool valve 60, and the collar 140 thermally expand. A diameter d1 of the inner peripheral surface 60a of the spool valve 60 and a diameter d2 of the outer peripheral surface 140a of the collar 140 shown in Fig. 9 are set within a range in which the inner peripheral surface 60a of the spool valve 60 is slidable relative to the outer peripheral surface 140a of the collar 140 in consideration of a thermal expansion difference when the environmental temperature is within a preset reference temperature.

Operations and effects of the valve device 130 and the shock absorber 100 provided with the valve device 130 according to Embodiment 2 are the same as operations and effects of the valve device 30 and the shock absorber 10 provided with the valve device 30 according to Embodiment 1.

The valve devices 30, 130 and the shock absorbers 10, 100 provided with the valve devices 30, 130 described above are summarized as follows.

Figs. 2 and 8 will be referred to. According to Embodiments 1, 2, first, the valve devices 30, 130 each include the passage forming member 40 that is formed of a tubular member and has the communication port 56 that provides communication between the inside and the outside of the passage forming member 40 in the radial direction, and the spool valve 60 that is formed of a tubular member directly or indirectly slidable relative to the passage forming member 40, has at least one cutout portion 62 and at least one cutout portion 63 cut out in the one end surface 61 (first end surface 61) in the axial direction Rs, and is configured to adjust the degree of communication of the cutout portions 62, 63 with the communication port 56 by relative displacement with respect to the passage forming member 40.

In this manner, the passage forming member 40 has the communication port 56 that provides communication in the radial direction. The tubular spool valve 60 has the cutout portions 62, 63 in the one end surface 61 in the axial direction Rs. The degree of communication of the cutout portions 62, 63 with the communication port 56 can be easily adjusted by the relative displacement of the spool valve 60 relative to the passage forming member 40. Moreover, the tubular spool valve 60 has the cutout portions 62, 63 in the one end surface 61. The cutout portions 62, 63 can be easily formed by setting a size and a depth in the axial direction Rs of the cutout portions 62, 63 and parameters of the shapes of the cutout portions 62, 63 and performing processing from the one end surface 61 in the axial direction Rs. Examples of the shape parameters include a shape such as a V shape or a rectangular shape, and the shapes of the bottoms 62b, 63b. Therefore, it is possible to improve variable characteristics of the valve device 30 and improve processability of the spool valve 60.

Reference is made to Figs. 2, 4A, 4B, and 8. Second, in the valve devices 30, 130 according to the first aspect, the cutout portions 62, 63 preferably each include at least one first cutout portion 62 having a first shape and at least one second cutout portion 63 having a second shape different from the first shape. The first cutout portion 62 and the second cutout portion 63 are arranged in the circumferential direction Rf of the spool valve 60. In this manner, the first cutout portion 62 having the first shape and the second cutout portion 63 having the second shape have different opening characteristics. By arranging the cutout portions 62, 63 having different shapes in the circumferential direction Rf of the spool valve 60, various variable characteristics of the valve device 30 can be obtained.

Reference is made to Figs. 2, 4A, 4B, and 8. Third, in the valve devices 30, 130 according to the second aspect, the first cutout portion 62 and the second cutout portion 63 preferably each have a pair. The pair of first cutout portions 62, 62 are arranged in axial symmetry (line symmetry) relative to the spool valve 60. The pair of second cutout portions 63, 63 are arranged symmetrically about the axis of the spool valve 60. In this manner, by arranging, symmetrically about the axis of the spool valve 60, cutout portions having the same shape, that is, the pair of first cutout portions 62, 62 or the pair of second cutout portions 63, 63, it is possible to achieve a balance of opening characteristics. As a result, a hydraulic pressure balance of the valve devices 30, 130 can be appropriately set.

Figs. 1, 2, and 8 will be referred to. Fourth, the valve devices 30, 130 according to the first to third aspects preferably each include the pressing member 80 configured to press the one end surface 61 (first end surface 61) of the spool valve 60 in the axial direction Rs, and the drive unit 71 that moves the spool valve 60 in the axial direction Rs via the pressing member 80. That is, the opening ends 62a, 63a of the cutout portions 62, 63 are located on the one end surface 61 of the spool valve 60 in the axial direction Rs. The pressing member 80 is interposed between the one end surface 61 and the drive unit 71. For this reason, the driving force of the drive unit 71 can be reliably transmitted to the spool valve 60 despite presence of the opening ends 62a, 63a of the cutout portions 62, 63 on the one end surface 61.

Figs. 2 and 8 will be referred to. Fifth, in the valve devices 30, 130 according to the first to fourth aspects, the spool valve 60 is preferably slidably fitted to the outer peripheral surface 40a of the passage forming member 40. That is, the spool valve 60 surrounds the outer peripheral surface 40a of the passage forming member 40. The sizes of the valve devices 30, 130 can be reduced as compared with a configuration in which the spool valve 60 is combined inside the passage forming member 40.

Figs. 2 and 8 will be referred to. Sixth, the valve devices 30, 130 according to the fifth aspect preferably each include the rod 72 located inside the passage forming member 40 and movable in the axial direction Rs of the spool valve 60, and the arm 73 extending radially outward from the rod 72 and movable together with the rod 72 to drive the spool valve 60 in the axial direction Rs. For this reason, the rod 72 located inside the passage forming member 40 can drive the spool valve 60 located outside the passage forming member 40 in the axial direction Rs via the arm 73. Although the spool valve 60 is located outside the passage forming member 40, the spool valve 60 can be easily driven by the rod 72 located on a center side.

Reference is made to Fig. 8. Seventh, the valve device 130 according to the first to sixth aspects preferably includes the tubular collar 140 interposed between the outer peripheral surface 40a of the passage forming member 40 and the inner peripheral surface 60a of the spool valve 60. The spool valve 60 is indirectly slidable relative to the passage forming member 40 by being slidably fitted to the outer peripheral surface 140a of the collar 140. The linear expansion coefficient of the collar 140 is larger than the linear expansion coefficient of the spool valve 60.

As the environmental temperature at which the valve device 130 is used increases, the spool valve 60 and the collar 140 thermally expand. Since the linear expansion coefficient of the collar 140 is larger than the linear expansion coefficient of the spool valve 60, a gap between the inner peripheral surface 60a of the spool valve 60 and the outer peripheral surface 140a of the collar 140 decreases as the temperature increases. The reduction in the gap reduces leakage of hydraulic fluid from the gap. Since the leakage of the hydraulic fluid decreases as the temperature increases, the degree of communication of the cutout portions 62, 63 with the communication port 56 can be accurately adjusted. That is, temperature characteristics of the valve device 130 can be improved. For example, in the shock absorber 100 provided with the valve device 130, a rate at which the damping force changes due to the temperature (temperature characteristics of the damping force) can be reduced, and thus stable damping force characteristics can be obtained regardless of the material of the passage forming member 40.

Reference is made to Figs. 1, 2, and 8. Eighth, the shock absorbers 10, 100 preferably each include the cylinder 13, the piston 22 that partitions the inside of the cylinder 13 into the first liquid chamber 23 and the second liquid chamber 24, and a respective one of the valve devices 30, 130 according to the first to seventh aspects provided in the communication passages 27, 127 that provide communication between the first liquid chamber 23 and the second liquid chamber 24. For this reason, the shock absorbers 10, 100 can exert a stable damping force by assembling the valve devices 30, 130.

The valve devices 30, 130 and the shock absorbers 10, 100 provided with the valve devices 30, 130 according to the present invention are not limited to the above embodiments as long as the operations and effects of the present invention are achieved.

### INDUSTRIAL APPLICABILITY

The valve devices 30, 130 and the shock absorbers 10, 100 provided with the valve devices 30, 130 of the present invention are suitably applied to a front fork or a rear damper mounted on a straddle-type vehicle.

### REFERENCE SIGNS LIST

10 ··· shock absorber
13 ··· cylinder
21 ··· piston rod
22 ··· piston
23 ··· first liquid chamber
24 ··· second liquid chamber
27 ··· communication passage
30 ··· valve device
40 ··· passage forming member
40a ··· outer peripheral surface
56 ··· communication port
60 ··· spool valve
60a ··· inner peripheral surface
60b ··· outer peripheral surface
61 ··· first end surface (one end surface)
62 ··· cutout portion (first cutout portion)
62a ··· opening end
63 ··· cutout portion (second cutout portion)
63a ··· opening end
64 ··· second end surface (other end surface)
71 ··· drive unit
72 ··· rod
72a ··· one end portion (lower end portion)
73 ··· arm
80 ··· pressing member
80a ··· inner peripheral surface
100 ··· shock absorber
127 ··· communication passage
130 ··· valve device
140 ··· collar
140a ··· outer peripheral surface
141 ··· communication port
Rf ··· circumferential direction of spool valve
Rs ··· axial direction of passage forming member (spool valve)

## Claims

1. A valve device comprising:
a passage forming member that is formed of a tubular member and has a communication port that provides communication between inside and outside of the passage forming member in a radial direction; and
a spool valve that is formed of a tubular member slidable directly or indirectly relative to the passage forming member, has at least one cutout portion cut out in one end surface in an axial direction, and is configured to adjust a degree of communication of the cutout portion relative to the communication port by relative displacement with respect to the passage forming member.

2. The valve device according to claim 1, wherein
the cutout portion includes at least one first cutout portion having a first shape and at least one second cutout portion having a second shape different from the first shape, and
the first cutout portion and the second cutout portion are arranged in a circumferential direction of the spool valve.

3. The valve device according to claim 2, wherein
the first cutout portion and the second cutout portion each have a pair,
the pair of first cutout portions are arranged symmetrically about an axis of the spool valve, and
the pair of second cutout portions are arranged symmetrically about the axis of the spool valve.

4. The valve device according to claim 1, further comprising:
a pressing member configured to press the one end surface of the spool valve in the axial direction, and
a drive unit configured to move the spool valve in the axial direction via the pressing member.

5. The valve device according to claim 1, wherein
the spool valve is slidably fitted to an outer peripheral surface of the passage forming member.

6. The valve device according to claim 1, further comprising:
a rod located inside the passage forming member and movable in the axial direction of the spool valve; and
an arm extending radially outward from the rod and movable together with the rod to drive the spool valve in the axial direction.

7. The valve device according to claim 1, further comprising:
a tubular collar interposed between an outer peripheral surface of the passage forming member and an inner peripheral surface of the spool valve, wherein
the spool valve is indirectly slidable relative to the passage forming member by being slidably fitted to an outer peripheral surface of the collar, and
the collar has a larger linear expansion coefficient than a linear expansion coefficient of the passage forming member.

8. A shock absorber comprising:
a cylinder;
a piston partitioning inside of the cylinder into a first liquid chamber and a second liquid chamber; and
the valve device according to claim 1 provided in a communication passage that provides communication between the first liquid chamber and the second liquid chamber.
